# EUROPEAN PATENT SPECIFICATION

(11) **EP 3 968 484 B1**
(45) Date of publication and mention of the grant of the patent: **19.08.2026**
(21) Application number: 20195279.3
(22) Date of filing: 09.09.2020
(51) Int. Cl.: H02J 3/38, H02J 3/48

(54) **CONTROL FOR ELECTRICAL CONVERTERS**
STEUERUNG FÜR ELEKTRISCHE WANDLER
COMMANDE POUR CONVERTISSEURS ÉLECTRIQUES

(43) Date of publication of application: 16.03.2022
(73) Proprietor: ABB Schweiz AG, 5400 Baden (CH); Hitachi Energy Ltd, 8050 Zürich (CH)
(72) Inventor: ALMER, Stefan, 8046 Zürich (CH); SCHWEIZER, Mario, 5406 Rütihof (CH)
(74) Representative: Vossius & Partner Patentanwälte Rechtsanwälte mbB

(56) References cited:
- CN-A- 105 006 834
- MARKOVIC UROS ET AL: "Fast Frequency Control Scheme through Adaptive Virtual Inertia Emulation", 2018 IEEE INNOVATIVE SMART GRID TECHNOLOGIES - ASIA (ISGT ASIA), IEEE, 22 May 2018 (2018-05-22), pages 787 - 792, XP033404821, DOI: 10.1109/ISGT-ASIA.2018.8467920
- YAZDANI SARA ET AL: "Power Synchronization PID Control Method for Grid-Connected Voltage-Source Converters", 2020 IEEE KANSAS POWER AND ENERGY CONFERENCE (KPEC), IEEE, 13 July 2020 (2020-07-13), pages 1 - 6, XP033812285, [retrieved on 20200814], DOI: 10.1109/KPEC47870.2020.9167628

## Description

The present disclosure relates to the control of electrical converters, in particular to a method for controlling an electrical converter for use in an AC power grid and an apparatus for controlling an electrical converter for use in an AC power grid.

Traditionally, electric power is generated by synchronous machines (SM), distributed to consumers via a power grid and used by passive consumers. However, the increased use of renewable energy has caused an increase in converter-interfaced energy resources. In renewable energy generation systems, the electric power is often DC, as in e.g., photovoltaic (PV) plants, or variable frequency AC, as in e.g., wind power plants. In such systems, grid connected DC/AC converters are required to feed power to the AC distribution grid. Thus, the increased presence of renewable energy implies that synchronous generators are more and more replaced by grid tied DC/AC converters.

It has been shown in many studies that there is a risk of grid instability if the utility grid is equipped with a high amount of renewable energy resources that do not employ any grid supporting control strategy. The reason for the instability is that such resources do not adapt their power injection to the grid according to the actual power demand in the grid. Such grid-agnostic current/power control strategies have been common in most converter-interfaced applications for a long time. However, in the last decades, more stringent regulations have been put in place, e.g. for PV converters. Today, PV converters have to gradually reduce the injected active power if the grid frequency increases above nominal. This behavior is a first step into the direction of grid-supporting power converter control. The injected active power is slowly adapted in response to the actual needs of the grid. Such a simple method only provides steady-state grid support, i.e. it still relies on synchronous generators in the grid that take over transient load changes.

In the meantime, more sophisticated converter control methods have been developed for insular grids, microgrids and railway grids. These control methods aim to provide not only steady-state grid support but also transient grid support. Converter-interfaced energy resources with such control methods are able to fully replace conventional synchronous generators in the grid. It is possible to run a grid without any conventional synchronous generator connected to it - a situation that has become common e.g. in railway grids already. There are a number of unique characteristics of such control methods that provide full grid support, i.e. both transient and steady-state grid support. One of the key requirements is the ability to automatically adapt the amount of injected power to the grid according to the demand of the various loads. This is achieved, inter alia, by changing the behavior from grid-agnostic constant power injection to a behavior that is closer to a voltage source. The converters equipped with such control methods adapt and share the injected power automatically such that they provide the actual power demanded from the various loads in the grid. Because of reasons of backwards compatibility with legacy equipment in AC power generation and distribution, the control methods aim to provide "inertia" to the grid, meaning that the rate of change of the grid frequency is limited. The combined effect of voltage source characteristics and inertia leads to a characteristic that is very close to the behavior of a synchronous generator. Such control methods provide full grid support and can fully replace synchronous generators in the grid.

Existing grid supporting control mechanisms can be classified into two main groups
- Droop control approaches: The control law is based on the steady-state coupling of frequency (or angle) and power flow in inductive grids. Various implementation variants exist and several ways of improving the method have been proposed over the last years. In most implementation variants, the method creates a voltage reference which has to be tracked with additional cascaded voltage- and current control loops.
- Virtual generator approaches: The control law is based on the principle of emulating the behavior of a synchronous generator. The mathematical model describing the behavior of the generator is implemented in the controller directly. Various implementation variants exist that differ mainly in the level of detail and the complexity of the implemented equations.

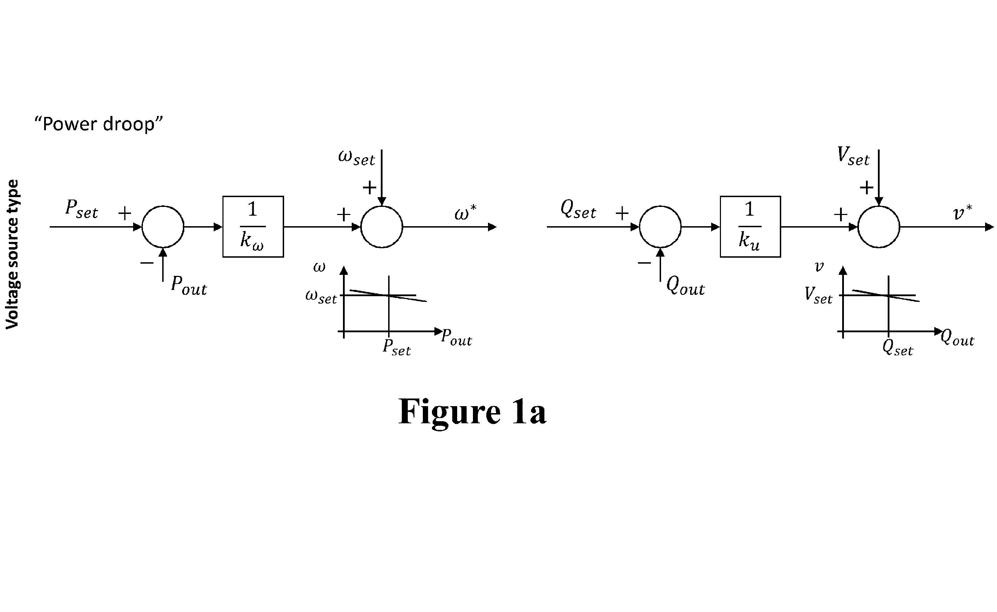

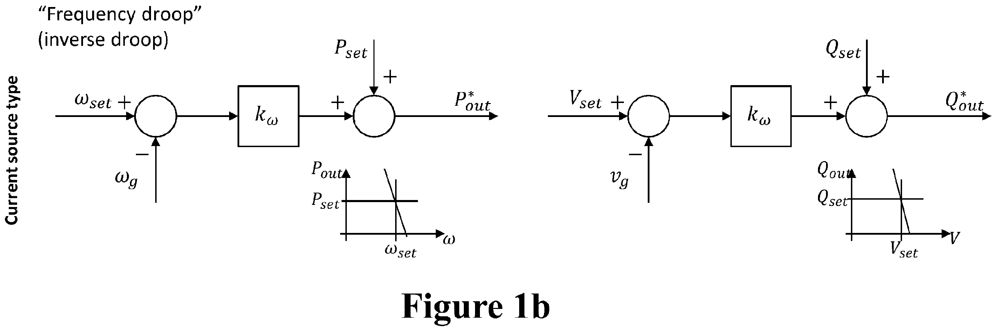

The basic concept of droop control for inductive grids in exemplarily shown in Figures 1a and 1b. In the direct method (Fig. 1a), the converter output voltage frequency and amplitude are adapted as a function of the output active power and reactive power. In other words, the output frequency/amplitude of the converter is changed depending on the measured active/reactive power. In the indirect method (Fig. 1b), the relationship is inverted, and the output active and reactive power are changed in response to the measured PCC (point of common coupling) voltage frequency and amplitude. In other words, the output active/reactive power of the converter is changed depending on the measured voltage frequency/amplitude. In this case, the output power reference can be tracked with subsequent inner control loops, e.g. current controllers.

Both droop control methods (direct and inverse) are usually not used in its basic form. Various additional control loops have to be implemented to make the concept applicable. The control loops have the following purposes:
- Cascaded voltage and current control loops: track the voltage and frequency reference given by the direct method and provide current control including current limitation.
- Current control loop and PLL (phase lock loop): track the active/reactive power references given by the inverse droop method and provide current control including current limitation. Provide grid synchronization and grid frequency measurement.
- Virtual impedance loop: emulate a virtual output impedance in order to improve the performance of droop control under various aspects.

Additional measures can be performed to improve the performance of droop control:
- Low-pass filtering of the measured active and reactive power can provide a virtual inertia effect.
- Low-pass filtering the virtual impedance reference is often required to reduce amplification of high frequency noise caused by the derivative used for the calculation of a virtual inductance.
- An additional **PLL** for the direct method is often required for synchronization with the grid before closing the MCB of the converter or during fault cases.
- Feedforward gains for the grid current and the PCC voltage improve the performance of the **PI** control loops.
- A lead-lag filter can be used to provide damping of low-frequency oscillations.

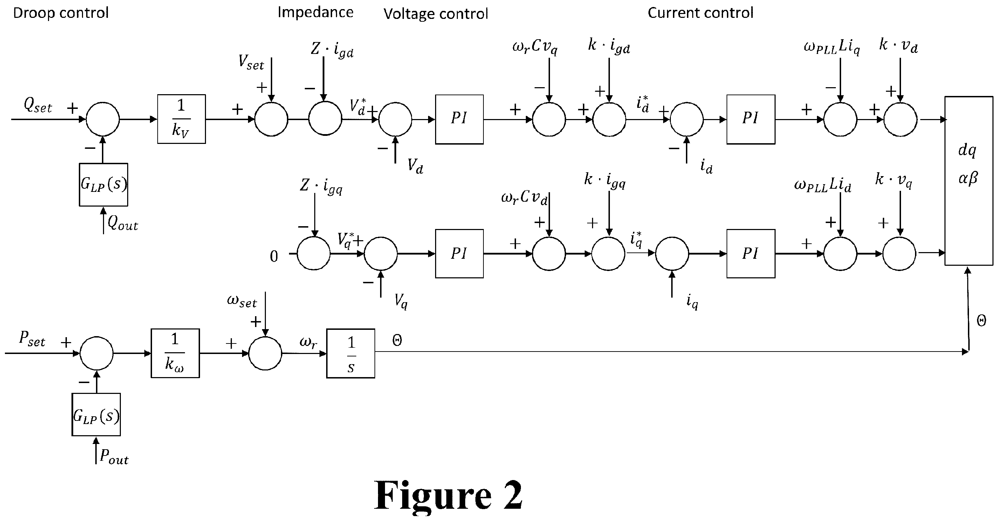

Figure 2 shows a typical implementation of such a direct droop control method with additional control loops. As can be seen from these additional measures, the control method becomes more and more complex and in general is difficult to tune. Negative interactions between droop control loops, virtual impedance, voltage control loop and current control loop are common, especially in applications with low converter switching frequency.

The main drawbacks of droop control are the following:
- Difficult tuning approach, high commissioning effort.
- Interactions between control loops due to insufficient bandwidth separation in converters with low switching frequency.
- Too many parameters to tune (typically around 15 parameters) with unknown interactions.
- Insufficient damping of low frequency oscillations.
- Insufficient reference tracking performance in strong grids.

**In** the virtual generator approach, the mathematical equations of a synchronous generator are implemented in a controller to emulate the behavior of the generator. **In** the direct approach, also known as the voltage source type, the mathematical machine equations are solved for the stator voltage which is given as a reference either directly to the modulation stage or to subsequent cascaded voltage and current control loops. **In** the inverse approach of the virtual generator approach, i.e. the so-called current source type, the mathematical machine equations are solved for the stator currents which are given as references to subsequent current control loops.

The various implementation variants of the virtual generator approach mainly differ in the complexity (order) of the adopted machine equations. Both, the direct and the inverse virtual generator approach, usually require various additional control loops to be implemented to make the concept applicable. The control loops have the following purposes:
- Cascaded voltage and current control loops: track the voltage and frequency reference given by the direct method and provide current control including current limitation.
- Current control loop and PLL: track the active/reactive power references given by the inverse method and provide current control including current limitation. Provide grid synchronization and grid frequency measurement.
- Virtual impedance loop: emulate a virtual stator impedance if it is not included in the high order machine model already.

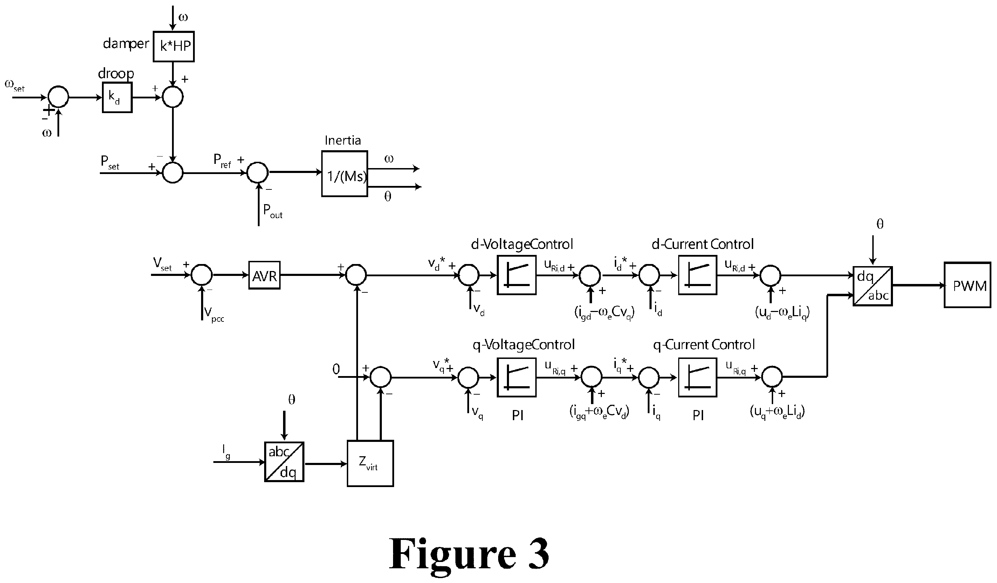

A basic VSM control implementation is shown in Fig. 3. Furthermore, additional measures can be used to improve the performance of the virtual generator:
- An additional PLL for the direct method can be used for synchronization with the grid before closing the MCB of the converter or during fault cases.
- AVR (automatic voltage regulation) control can be used to improve the voltage regulation at the PCC.
- Feedforward gains for the grid current and the PCC voltage can be used to improve the performance of the PI control loops.
- Damper winding emulation can be used to improve damping of low-frequency oscillations.
- In a simple inverse method, the virtual inertia effect can be emulated with a derivative of the measured grid frequency.
- Low-pass filtering the virtual impedance reference can be to reduce amplification of high frequency noise caused by the derivative used for the calculation of a virtual inductance.

As can be seen above, the control method becomes more and more complex and in general is difficult to tune. Negative interactions between virtual generator control loops, AVR, virtual impedance, voltage control loop and current control loop are common, especially in applications with low converter switching frequency. The main drawbacks of virtual generator control are:
- Difficult tuning approach, high commissioning effort.
- Interactions between control loops due to insufficient bandwidth separation in converters with low switching frequency.
- Too many parameters to tune (typically around 15 parameters) with unknown interactions.
- Insufficient reference tracking performance in strong grids.
- Loose of synchronism during faults.

CN 105 006 834 A relates to a virtual inertia control method based on virtual synchronous generator. Markovic, U. et al. disclose a "Fast Frequency Control Scheme through Adaptive Virtual Inertia Emulation", Proceedings of the 2018 IEEE Innovative Smart Grid Technologies - Asia, pages 787-792, 22 May 2018.

The present disclosure relates to a simple and systematic grid supporting controller and a method for simple and systematic grid support. The invention is defined in the independent claims. Dependent claims describe preferred embodiments.

The present disclosure relates to a method for controlling an electrical converter for use in an AC power grid. The method comprises calculating a rotation angle *θ* of a voltage waveform of an AC output voltage of the converter based on an active power *P_{conv}* of the converter, a reference active power ${P}_{conv}^{ref}$ of the converter and a frequency deviation *ξ*₂ of the voltage of the AC power grid from a nominal grid frequency of the AC power grid. The method further comprises controlling the electrical converter to output an AC output voltage having the calculated rotation angle *θ*.

Various embodiments may preferably implement the following feature:
Preferably, the method is computer-implemented.

Preferably, the rotation angle *θ* is calculated based on a weighted sum of the active power *P_{conv}* of the converter, the reference active power ${P}_{conv}^{ref}$ of the converter and the frequency deviation *ξ*₂ of the voltage of the AC power grid. Preferably, the rotation angle *θ* is calculated based on the integral of the weighted sum of the active power *P_{conv}* of the converter, the reference active power ${P}_{conv}^{ref}$ of the converter and the frequency deviation *ξ*₂ of the voltage of the AC power grid.

Preferably, the weighting factors of the weighted sum are determined by a linear-quadratic regulator, LQR, feedback vector calculated based on a linear dynamic model of the frequency deviation *ξ*₂ of the voltage of the AC power grid, and the active power *P_{conv}* of the converter.

Preferably, the linear dynamic model is based on a swing equation.

Preferably, the swing equation includes a term with a droop constant representing the droop characteristics of the grid voltage frequency *ω_{g}.*

Preferably, the swing equation includes a term representing a low pass filter, the low pass filter representing a delayed response of the grid voltage frequency *ω_{g}.*

The grid voltage frequency deviation *ξ*₂ is estimated based on a voltage frequency of the converter, the derivative of the active power *P_{conv}* of the converter, and a low-pass filter.

Preferably, the reference active power ${P}_{conv}^{ref}$ of the converter is estimated based on a nominal grid frequency *ωₙ*, a voltage of the point of common coupling *v_{pcc},* a virtual inductance *Lᵥᵢᵣₜ* between a voltage of the converter *v_{conv}* and the voltage of the point of common coupling *v_{pcc}.*

The present disclosure also relates to a computer-readable medium comprising instructions which, when executed by a computer, cause the computer to carry out the method of any of the aforementioned embodiments.

The present disclosure also relates to an apparatus for controlling an electrical converter for use in an AC power grid. The apparatus comprises a processor which is configured to calculate a rotation angle *θ* of a voltage waveform of an AC output voltage of the converter based on an active power *P_{conv}* of the converter, a reference active power ${P}_{conv}^{ref}$ of the converter and a frequency deviation *ξ*₂ of the voltage of the AC power grid from a nominal grid frequency of the AC power grid. The processor is also configured to control the electrical converter to output an AC output voltage having the calculated rotation angle (*θ*).

Various embodiments may preferably implement the following feature:
Preferably, the processor is configured to calculate the rotation angle *θ* based on a weighted sum of the active power *P_{conv}* of the converter, the reference active power ${P}_{conv}^{ref}$ of the converter and the frequency deviation *ξ*₂ of the voltage of the AC power grid, in particular based on the integral of the weighted sum of the active power *P_{conv}* of the converter, the reference active power ${P}_{conv}^{ref}$ of the converter and the frequency deviation *ξ*₂ of the voltage of the AC power grid.

Preferably, the processor is configured to determine the weighting factors of the weighted sum by a linear-quadratic regulator, LQR, feedback vector calculated based on a linear dynamic model of the frequency deviation *ξ*₂ of the voltage of the AC power grid, and the active power *P_{conv}* of the converter.

Preferably, the linear dynamic model is based on a swing equation.

Preferably, the swing equation includes a term with a droop constant representing the droop characteristics of the grid voltage frequency *ω_{g}.*

Preferably, the swing equation includes a term representing a low pass filter, the low pass filter representing a delayed response of the grid voltage frequency *ω_{g}.*

The processor is configured to estimate the grid voltage frequency deviation *ξ*₂ based on a voltage frequency of the converter, the derivative of the active power *P_{conv}* of the converter, and a low-pass filter.

Preferably, the processor is configured to estimate the reference active power ${P}_{conv}^{ref}$ of the converter based on a nominal grid frequency *ωₙ*, a voltage of the point of common coupling *v_{pcc},* a virtual inductance *Lᵥᵢᵣₜ* between a voltage of the converter *v_{conv}* and the voltage of the point of common coupling *v_{pcc}.*

For the method according to the present disclosure, the following modeling conditions have been assumed:
- The converter dynamics are neglected, and the converter output voltage is directly controlled. For current limitation and fault handling, the method according to the present disclosure can be combined with subsequent low-level control algorithms (e.g. cascaded voltage-current control, or virtual impedance emulation and current control).
- The grid frequency is modeled by a swing equation.
- The grid voltage amplitude is assumed to be constant.

The above and other aspects and their implementations are described in greater detail in the drawings, the descriptions, and the claims.
Figures 1a and 1b show basic concepts of droop control for inductive grids.
Figure 2 shows a typical implementation of a direct droop control method with additional control loops.
Figure 3 shows an illustration of a basic virtual synchronous motor implementation.
Figure 4a shows an illustration of the concept of calculating the rotation angle *θ* of an AC output voltage of a converter according to an embodiment of the present disclosure.
Figure 4b shows a schematic illustration of the rotational angle *θ* of the voltage waveform of the AC output voltage of the converter
Figure 5 shows an illustration of the concept of determination of a frequency deviation *ξ*₂ of the voltage of the AC power grid from a nominal grid frequency of the AC power grid according to an embodiment of the present disclosure.
Figure 6 shows a schematic illustration of an apparatus 10 for controlling an electrical converter for use in an AC power grid according to an embodiment of the present disclosure.

In the derivation of the control algorithm for the control method according to the present disclosure, it is assumed that the grid and converter voltages and currents are balanced three-phase in the form: ${ν}_{abc} = \left[\begin{matrix}sin \left(ωt\right) \\ sin \left(ωt-2π/3\right) \\ sin \left(ωt+2π/3\right)\end{matrix}\right]$ *v_{abc}* denotes the voltage vector and the current *i* can be represented in the same manner.

Using an amplitude invariant αβ-transformation, the voltage can be denoted as: ${ν}_{αβ} = \left[\begin{matrix}2 / 3 & - 1 / 3 & - 1 / 3 \\ 0 & 1 / \sqrt{3} & - 1 / \sqrt{3}\end{matrix}\right] {ν}_{abc} = \left[\begin{matrix}sin \left(ωt\right) \\ - cos \left(ωt\right)\end{matrix}\right]$

It is understood by the skilled person that the representation of the current can be transformed in the same manner.

According to an exemplary embodiment, a converter to a power grid is considered. The output voltage of the converter is considered as the control input and is denoted with v. We thus neglect the dynamics of the converter filter. The grid is modeled as a synchronous machine (SM) behind a grid impedance. The SM is assumed to have mechanical power input Pg. Thus, the SM has the following parameters:
- L_{g}: grid inductance
- i_{g}: grid current
- P_{g}: grid power

The converter has the following parameters:
- v: converter voltage
- *P_{conv}*: converter power

The SM is assumed to be controlled with droop control and a governor which introduces a delay in the response. The power *P_{g}* is controlled as ${P}_{g} = {P}_{g}^{ref} - {k}_{g} \frac{{ω}_{lp}}{s + {ω}_{lp}} \left({ω}_{n}-{ω}_{g}\right)$ with
${P}_{g}^{ref}$ : nominal set point of the grid power
*k_{g}*: droop gain
*ωₙ* : nominal grid frequency
*ω_{g}* : grid frequency
*ωₗₚ*: cutoff frequency of the low-pass filter used to model the governor delay
s: is the Laplace operator

The set point ${P}_{g}^{ref}$ may also be low-pass filtered.

The model of the grid is based on the swing equation and is represented in the above described *αβ*-frame. The grid voltage amplitude can be considered to be constant, but the frequency to be varying so that the voltage *v_{g}* of the grid can be written as: ${ν}_{g} \left({θ}_{g}\right) = {V}_{g} \left[\begin{matrix}sin \left({θ}_{g}\right) \\ - cos \left({θ}_{g}\right)\end{matrix}\right]$ with *θ_{g}* being the rotation angle of the grid voltage.

The rotation angle *θ_{g}* can be modeled as ${θ}_{g} \left(t\right) = {ω}_{n} t + δ$ *δ* is the solution to the following swing equation: ${J}_{in} {ω}_{n} {δ}^{¨} + {Dω}_{n} \dot{δ} = {P}_{conv} - {P}_{g}^{ref} + {k}_{g} \frac{{ω}_{lp}}{s + {ω}_{lp}} {{\left({ω}_{n}-{ω}_{g}\right)}_{︸}}_{- \dot{δ}}$ with
*δ̇*: 1^{st} order time derivative of variable *δ*
*δ̈*: 2^{nd} order time derivative of variable *δ*
*Jᵢₙ*: inertia
D: damping

The power provided by the grid converter is ${P}_{conv} = \frac{3}{2} {i}_{g}^{T} ν$

When the reference power is achieved, the acceleration/deceleration of the grid frequency stops, and the grid voltage is periodic with frequency *ωₙ*. In the grid model, the often unknown value of the damping can be set to zero. It is known in the art (see, e.g. [1]) that the droop controller of the SM makes use of the frequency ${ω}_{g} : = {\dot{θ}}_{g} = {ω}_{n} + \dot{δ}$ which leads to ${ω}_{n} - {ω}_{g} = - \dot{δ} .$

The dynamics of the variable *δ* can be written in the state space form ${ξ}_{1} = δ$ ${ξ}_{2} = \dot{δ}$ ${ξ}_{3} = \frac{{ω}_{lp}}{s + {ω}_{lp}} \dot{δ}$ $ξ = \left[\begin{matrix}{ξ}_{1} \\ {ξ}_{2} \\ {ξ}_{3}\end{matrix}\right]$

With *ξ*₂ = *δ̇* being the deviation from the nominal grid frequency.

The dynamics of ξ are $\dot{ξ} = {{\left[\begin{matrix}0 & 1 & 0 \\ 0 & - \frac{D}{{J}_{in}} & - \frac{{k}_{g}}{{ω}_{n} {J}_{in}} \\ 0 & {ω}_{lp} & - {ω}_{lp}\end{matrix}\right] }_{︸}}_{{A}_{ξ}} ξ + {{\left[\begin{matrix}0 \\ \frac{1}{{ω}_{n} {J}_{in}} \\ 0\end{matrix}\right]}_{︸}}_{{B}_{ξ}} \left({P}_{conv}-{P}_{g}^{ref}\right) .$

The grid current dynamics are $\frac{d}{dt} {i}_{g} = \frac{1}{{L}_{g}} \left(ν-{ν}_{g}\right) .$

In the derivation of a dynamic equation for the active power, the dynamics of the grid current is neglected, and it is assumed that the grid current instantaneously reaches its steady state value. In other words, it is assumed that the grid current is assumed to be at its steady state, which is determined by the converter and grid voltage.

The steady state solution ${i}_{g}^{ss}$ is assumed to be in the form ${i}_{g}^{ss} = I \left[\begin{matrix}sin \left({ω}_{n}t+{ϕ}_{i}\right) \\ - cos \left({ω}_{n}t+{ϕ}_{i}\right)\end{matrix}\right] .$

Putting this expression of ${i}_{g}^{ss}$ in the above equation for the grid current dynamics and solving for ${i}_{g}^{ss}$ yields the steady state expression ${i}_{g}^{ss} = \frac{1}{{ω}_{n} {L}_{g}} {J}^{T} \left(ν-{ν}_{g}\right)$ with $J : = I \left[\begin{matrix}0 & - 1 \\ 1 & 0\end{matrix}\right]$ being a rotation matrix.

Using the above steady state expression for ${i}_{g}^{ss}$*,* and assuming the converter voltage to be in the form $ν \left(θ\right) = V \left[\begin{matrix}sin \left(θ\right) \\ - cos \left(θ\right)\end{matrix}\right] ,$ the converter power can be written as: $\begin{matrix}{P}_{conv} = \frac{3}{2} {i}_{g}^{ssT} ν \\ = \frac{3}{2} \frac{1}{{ω}_{n} {L}_{g}} {\left(ν-{ν}_{g}\right)}^{T} Jν \\ = \frac{3}{2} \frac{- 1}{{ω}_{n} {L}_{g}} {ν}_{g}^{T} Jν \\ = \frac{3}{2} \frac{- {VV}_{g}}{{ω}_{n} {L}_{g}} {\left[\begin{matrix}sin \left({ω}_{n}t+{ξ}_{1}\right) \\ - cos \left({ω}_{n}t+{ξ}_{1}\right)\end{matrix}\right]}^{T} \left[\begin{matrix}0 & - 1 \\ 1 & 0\end{matrix}\right] \left[\begin{matrix}sin \left({ω}_{n}t+θ\right) \\ - cos \left({ω}_{n}t+θ\right)\end{matrix}\right] \\ = \frac{3}{2} \frac{- {VV}_{g}}{{ω}_{n} {L}_{g}} \left(sin\left({ω}_{n}t+{ξ}_{1}\right)cos\left({ω}_{n}t+θ\right)-cos\left({ω}_{n}t+{ξ}_{1}\right)sin\left({ω}_{n}t+θ\right)\right) \\ = \frac{3}{2} \frac{{VV}_{g}}{{ω}_{n} {L}_{g}} sin \left(θ-{ξ}_{1}\right) .\end{matrix}$

The time derivative of this expression is $\begin{matrix}{\dot{P}}_{conv} = \frac{3}{2} \frac{{VV}_{g}}{{ω}_{n} {L}_{g}} cos \left(θ-{ξ}_{1}\right) \left(\dot{θ}-{\dot{ξ}}_{1}\right) \\ \approx \frac{3}{2} \frac{{VV}_{g}}{{ω}_{n} {L}_{g}} cos \left({θ}^{ss}-{ξ}_{1}^{ss}\right) \left(\dot{θ}-{\dot{ξ}}_{1}\right) \\ = \frac{3}{2} \frac{{VV}_{g}}{{ω}_{n} {L}_{g}} cos \left({η}^{ss}\right) \left(\dot{θ}-{\dot{ξ}}_{1}\right) \\ = \frac{3}{2} \frac{{VV}_{g}}{{ω}_{n} {L}_{g}} cos \left({η}^{ss}\right) \dot{θ} - \frac{3}{2} \frac{{VV}_{g}}{{ω}_{n} {L}_{g}} cos \left({η}^{ss}\right) {ξ}_{2}\end{matrix}$ with ${η}^{ss} : = {θ}^{ss} - {ξ}_{1}^{ss}$ being the steady state power angle.

The grid state above and the active power can now be described in a common system description which can be used for a linear feedback design which will be described below. Let $x = \left[\begin{matrix}{ξ}_{1} \\ {ξ}_{2} \\ {ξ}_{3} \\ {P}_{conv}\end{matrix}\right] .$

The dynamics of *x* are: $\dot{x} = {{\left[\begin{matrix}0 & 1 & 0 & 0 \\ 0 & - \frac{D}{{J}_{in}} & - \frac{{k}_{g}}{{ω}_{n} {J}_{in}} & \frac{1}{{ω}_{n} {J}_{in}} \\ 0 & {ω}_{lp} & - {ω}_{lp} & 0 \\ 0 & - \frac{3}{2} \frac{{VV}_{g}}{{ω}_{n} {L}_{g}} cos \left({η}^{ss}\right) & 0 & 0\end{matrix}\right]}_{︸}}_{A} x + {{\left[\begin{matrix}0 \\ \frac{1}{{ω}_{n} {J}_{in}} \\ 0 \\ 0\end{matrix}\right]}_{︸}}_{F} \left(-{P}_{g}^{ref}\right) + {{\left[\begin{matrix}0 \\ 0 \\ 0 \\ \frac{3}{2} \frac{{VV}_{g}}{{ω}_{n} {L}_{g}} cos \left({η}^{ss}\right)\end{matrix}\right]}_{︸}}_{B} \dot{θ} .$

It is understood by the skilled person that the control input *θ̇* is the converter voltage frequency. In the following, this dynamic system can be used for a feedback control where *θ̇* is controlled with linear state feedback.

The feedback model according to an embodiment of the present disclosure is a linear-quadratic regulator (LQR) which for which the following feedback structure is assumed: $\dot{θ} = - {k}_{1} {ξ}_{2} - {k}_{2} \left({P}_{conv}-{P}_{conv}^{ref}\right) .$

Without loss of generality, the variable ξ₃ can be neglected as it would require knowledge about the low-pass filter cut-off frequency ωₗₚ and it is not reasonable to assume this knowledge.

The feedback gains are designed using the LQR feedback model. Considering the aforementioned dynamics of *x,* the cost matrices can be chosen as: $Q = \left[\begin{matrix}ε & 0 & 0 & 0 \\ 0 & 1 & 0 & 0 \\ 0 & 0 & ε & 0 \\ 0 & 0 & 0 & {q}_{44}\end{matrix}\right] , R > 0$ with ε being a small positive number (ε « 1). The Q matrix generally imposes penalties on the deviations of the states from their reference values. The R matrix, which in this case is a scalar, is used to penalize the controller actuator. The tuning of the LQR controller is thus dependent on the two weights q₄₄ and R. The LQR feedback gain will be a four dimensional vector *K_{lqr},* from the feedback gains k₁ and k₂ for the above feedback structure can be selected: ${K}_{lqr} = \left[{k}_{lqr , 1} {{{k}_{lqr , 2}}_{︸}}_{{k}_{1}} {k}_{lqr , 3} {{{k}_{lqr , 4}}_{︸}}_{{k}_{2}}\right] .$

The right choice of the cost matrix Q assures that the gains *k_{lqr,1}* and *k_{lqr,3}* are very small and can be neglected.

For the droop curve tracking, one can use the fact that at steady state, the frequency of the converter and grid must coincide, which means that the steady state control input must satisfy: ${\dot{θ}}^{ss} = {ξ}_{2}^{ss} = - {k}_{1} {ξ}_{2}^{ss} - {k}_{2} \left({P}_{conv}^{ss}-{P}_{conv}^{ref}\right)$ with
*θ̇^{ss}*: converter voltage frequency in the steady state
${ξ}_{2}^{ss}$ : steady state of variable ξ₂
${P}_{conv}^{ss}$: converter power in the steady state.

This implies: ${ξ}_{2}^{ss} = \frac{- {k}_{2}}{{{1 + {k}_{1}}_{︸}}_{{k}_{droop}}} \left({P}_{conv}^{ss}-{P}_{conv}^{ref}\right) .$

In other words, the steady state relation between the steady state power and frequency, known as the droop curve, is a function of the relationship between the gains k₁ and k₂. The droop constant k_{droop} is assumed to be given, and this imposes the following relation between the feedback gains: ${k}_{1} = - 1 + \frac{{k}_{2}}{{k}_{droop}} .$

It should be noted that the gains obtained from the LQR design do not necessarily satisfy the relation ${k}_{1} = - 1 + \frac{{k}_{2}}{{k}_{droop}}$ imposed by the droop curve. However, said relaxing condition improves the dynamic performance.

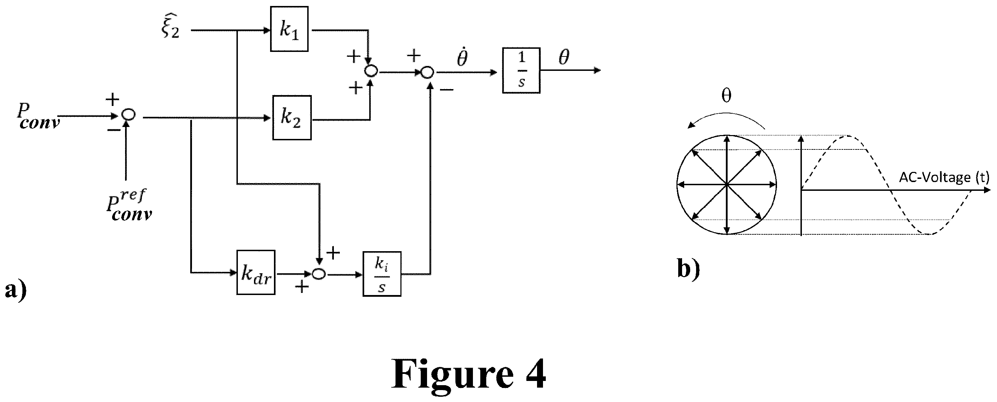

Satisfying the droop curve can be ensured by adding a slow outer integral loop: To impose the droop curve at steady state, an integral term can be added which penalizes deviations from the curve: $\dot{θ} = \dot{{θ}^{˜}} - \frac{{k}_{i}}{s} \left({ξ}_{2}+{k}_{droop}\left({P}_{conv}-{P}_{conv}^{ref}\right)\right)$ with 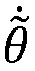 : output of the linear feedback. A schematic illustration of the aforementioned equation is shown in Figure 4a. Figure 4b shows a schematic illustration of the rotational angle *θ* of the voltage waveform of the AC output voltage of the converter. This rotation angle *θ* is used for controlling the electrical converter.

According to an embodiment, the power reference can be calculated via virtual inductance. The steady state power of the system depends on the load which is connected to the network. Ideally, the steady state power would be set as (a fraction of) the reference power ${P}_{conv}^{ref}$ for the power in the linear feedback control. However, since the load is generally unknown, this is not (always) possible to do directly. In principle, it is possible to implement some estimation scheme to estimate the load, and from this estimate the steady state power reference could be calculated. However, this approach would be highly complex, parameter dependent and non-robust. Thus, according to an embodiment of the present disclosure to compute the reference for the converter power is to consider a virtual inductance *Lᵥᵢᵣₜ* between the converter voltage v and the PCC voltage *v_{pcc}.* The converter voltage and the PCC voltage can be measured, and the corresponding steady state current through the virtual inductance is calculated. This current is then multiplied with the converter voltage to produce a virtual power which is used as a reference for the linear feedback control of the converter. The virtual power can be calculated as: ${P}_{virt} = \frac{3}{2} \frac{- 1}{{ω}_{n} {L}_{virt}} {ν}_{pcc} Jν$

This value can be used for the power reference: ${P}_{conv}^{ref} = {P}_{virt}$

According to the present disclosure, the feedback control makes use of the grid frequency deviation ξ₂ and the converter power *P_{conv}.* The converter power is directly measurable, but the grid frequency must be estimated. Thus, according to an embodiment, an estimator for the grid frequency is derived, which estimates the frequency based on measurements of the converter power. Thus, with this estimator, the only measurement required by the control system is the converter power.

As was shown above, the derivative of the converter power satisfies ${\dot{P}}_{conv} \approx {{\frac{3}{2} \frac{{VV}_{g}}{{ω}_{n} {L}_{g}} cos \left({η}^{ss}\right)}_{︸}}_{K} \dot{θ} - \frac{3}{2} \frac{{VV}_{g}}{{ω}_{n} {L}_{g}} cos \left({η}^{ss}\right) {ξ}_{2} .$

Solving this equation for the grid frequency ξ₂ leads to ${ξ}_{2} = \dot{θ} - \frac{{\dot{P}}_{conv}}{K} .$

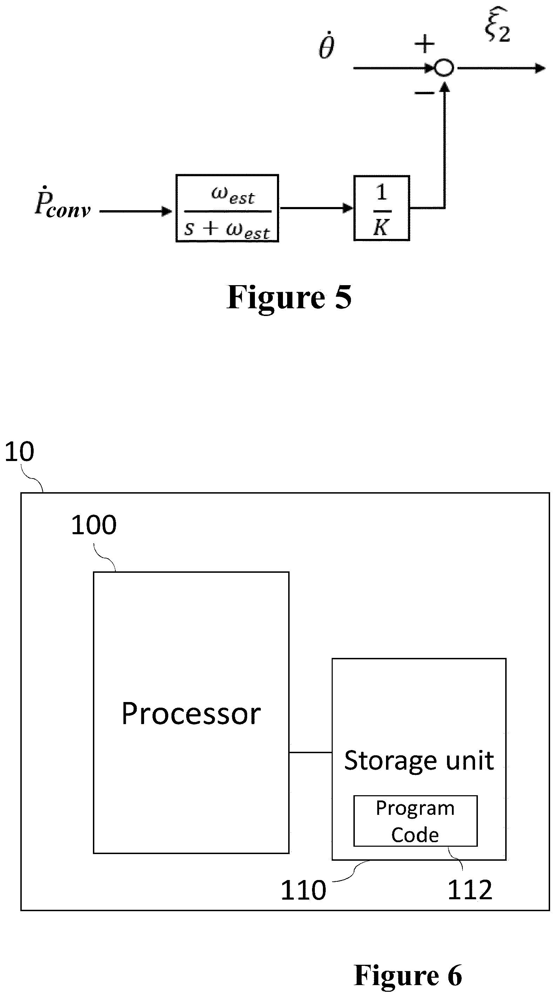

Thus, the grid frequency deviation can be estimated as ξ̂₂ of the grid frequency as ${\hat{ξ}}_{2} = \dot{θ} - \frac{1}{K} \frac{{ω}_{est}}{s + {ω}_{est}} {\dot{P}}_{conv}$ where *ωₑₛₜ* is the cut off frequency of a low pass filter. The low pass filter may be required to remove the high frequency noise in the derivative of the converter output power. Figure 5 shows a schematic illustration of the aforementioned equation.

Figure 6 shows a schematic illustration of an apparatus 10 for controlling an electrical converter for use in an AC power grid according to an embodiment of the present disclosure. The apparatus includes a processor 100, such as, e.g. a microprocessor or an Application Specific Integrated Circuit (ASIC) and a storage unit 110. The storage unit 110 may be any data storage device that stores a program code 112, which is accessed and executed by the processor 100. The processor 100 may implement any one of the steps in exemplified embodiments above of the apparatus 10, e.g., by executing the program code 112. The processor is configured to calculate a rotation angle *θ* (of a voltage waveform) of an AC output voltage of the converter based on an active power *P_{conv}* of the converter, a reference active power ${P}_{conv}^{ref}$ of the converter and a frequency deviation ξ₂ of the voltage of the AC power grid from a nominal grid frequency of the AC power grid; and control the electrical converter to output an AC output voltage having the calculated rotation angle (*θ*).

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

## Claims

1. A method for controlling an electrical converter for use in an AC power grid, the method comprising:
calculating a rotation angle (*θ*) of a voltage waveform of an AC output voltage of the converter based on an active power (*P_{conv}*) of the converter, a reference active power ( ${P}_{conv}^{ref}$) of the converter and a frequency deviation (ξ̂₂) of the voltage of the AC power grid from a nominal grid frequency of the AC power grid;
controlling the electrical converter to output an AC output voltage having the calculated rotation angle (*θ*); the method being **characterised in that** the grid voltage frequency deviation (ξ̂₂) is estimated based on a voltage frequency (*θ̇*) of the converter, the derivative of the active power (*P_{conv}*) of the converter, and a low-pass filter by ${\hat{ξ}}_{2} = \dot{θ} - \frac{1}{K} \frac{{ω}_{est}}{s + {ω}_{est}} {\dot{P}}_{conv} ,$
where *ωₑₛₜ* is the cut off frequency of a low pass filter.

2. The method according to claim 1, wherein the rotation angle (*θ*) is calculated based on a weighted sum of the active power (*P_{conv}*) of the converter, the reference active power ( ${P}_{conv}^{ref}$) of the converter and the frequency deviation (*ξ*₂) of the voltage of the AC power grid, in particular based on the integral of the weighted sum of the active power (*P_{conv}*) of the converter, the reference active power ( ${P}_{conv}^{ref}$) of the converter and the frequency deviation (ξ₂) of the voltage of the AC power grid, by $\dot{θ} = - {k}_{1} {ξ}_{2} - {k}_{2} \left({P}_{conv}-{P}_{conv}^{ref}\right) ,$ wherein *k₁* and *k₂* are weighting factors.

3. The method according to claim 2, wherein the weighting factors of the weighted sum are determined by a linear-quadratic regulator, LQR, feedback vector calculated based on a linear dynamic model of the frequency deviation (ξ₂) of the voltage of the AC power grid, and the active power (*P_{conv}*) of the converter.

4. The method according to claim 3, wherein the linear dynamic model is based on a swing equation.

5. The method according to claim 4, wherein the swing equation includes a term with a droop constant representing the droop characteristics of the grid voltage frequency (*ω_{g}*)*.*

6. The method according to claim 4 or 5, wherein the swing equation includes a term representing the low pass filter, the low pass filter representing a delayed response of the grid voltage frequency (*ω_{g}*)*.*

7. The method according to any one of claims 1 to 6, wherein the reference active power ( ${P}_{conv}^{ref}$) of the converter is estimated based on a nominal grid frequency (*ωₙ*), a voltage of the point of common coupling (*v_{pcc}*), a virtual inductance (*Lᵥᵢᵣₜ*) between a voltage of the converter (*v_{conv}*) and the voltage of the point of common coupling (*v_{pcc}*) by ${P}_{virt} = \frac{3}{2} \frac{- 1}{{ω}_{n} {L}_{virt}} {ν}_{pcc} Jν ,$ wherein ${P}_{conv}^{ref} = {P}_{virt}$ and *J* is a rotation matrix.

8. An apparatus for controlling an electrical converter for use in an AC power grid, the apparatus comprising a processor being configured to:
calculate a rotation angle (*θ*) of a voltage waveform of an AC output voltage of the converter based on an active power (*P_{conv}*) of the converter, a reference active power ( ${P}_{conv}^{ref}$) of the converter and a frequency deviation (ξ₂) of the voltage of the AC power grid from a nominal grid frequency of the AC power grid;
control the electrical converter to output an AC output voltage having the calculated rotation angle (*θ*); the apparatus being **characterised in that** the processor is configured to estimate the grid voltage frequency deviation (ξ₂) based on a voltage frequency of the converter, the derivative of the active power (*P_{conv}*) of the converter, and a low-pass filter by ${\hat{ξ}}_{2} = \dot{θ} - \frac{1}{K} \frac{{ω}_{est}}{s + {ω}_{est}} {\dot{P}}_{conv}$ where *ωₑₛₜ* is the cut off frequency of a low pass filter.

9. The apparatus according to claim 8, wherein the processor is configured to calculate the rotation angle (*θ*) based on a weighted sum of the active power (*P_{conv}*) of the converter, the reference active power ( ${P}_{conv}^{ref}$) of the converter and the frequency deviation (ξ₂) of the voltage of the AC power grid, in particular based on the integral of the weighted sum of the active power (*P_{conv}*) of the converter, the reference active power ( ${P}_{conv}^{ref}$) of the converter and the frequency deviation (ξ₂) of the voltage of the AC power grid, by $\dot{θ} = - {k}_{1} {ξ}_{2} - {k}_{2} \left({P}_{conv}-{P}_{conv}^{ref}\right) ,$ wherein *k₁* and *k₂* are weighting factors.

10. The apparatus according to claim 9, wherein the processor is configured to determine the weighting factors of the weighted sum by a linear-quadratic regulator, LQR, feedback vector calculated based on a linear dynamic model of the frequency deviation (ξ₂) of the voltage of the AC power grid, and the active power (*P_{conv}*) of the converter.

11. The apparatus according to claim 10, wherein the linear dynamic model is based on a swing equation.

12. The apparatus according to any of claims 8 to 11, wherein the processor is configured to estimate the reference active power ( ${P}_{conv}^{ref}$) of the converter based on a nominal grid frequency (*ωₙ* ), a voltage of the point of common coupling (*v_{pcc}*), a virtual inductance *(Lᵥᵢᵣₜ*) between a voltage of the converter *v_{conv}* and the voltage of the point of common coupling (*v_{pcc}*) by ${P}_{virt} = \frac{3}{2} \frac{- 1}{{ω}_{n} {L}_{virt}} {ν}_{pcc} Jν ,$ wherein ${P}_{conv}^{ref} = {P}_{virt}$ and *J* is a rotation matrix.

13. A computer-readable medium comprising instructions which, when executed by a computer, cause the computer to carry out the method of any of claims 1 to 7.

## Patentansprüche

1. Ein Verfahren zum Steuern eines elektrischen Umrichters zur Verwendung in einem Wechselstromnetz, wobei das Verfahren Folgendes umfasst:
Berechnen eines Drehwinkels (θ) einer Spannungswellenform einer AC-Ausgabespannung des Umrichters basierend auf einer Wirkleistung (P_{conv}) des Umrichters, einer Referenzwirkleistung ( ${P}_{conv}^{Ref}$) des Umrichters und einer Frequenzabweichung (*ξ̂*₂) der Spannung des Wechselstromnetzes von einer Nennnetzfrequenz des Wechselstromnetzes;
Steuern des elektrischen Umrichters zum Ausgeben einer Ausgabewechselspannung mit dem berechneten Drehwinkel (θ) ;
wobei das Verfahren **dadurch gekennzeichnet ist, dass** die Netzspannungsfrequenzabweichung (*ξ̂*₂) basierend auf einer Spannungsfrequenz (θ̇) des Umrichters, der Ableitung der Wirkleistung (P_{conv}) des Umrichters und einem Tiefpassfilter geschätzt wird durch ${\hat{ξ}}_{2} = \dot{θ} - \frac{1}{K} \frac{{ω}_{est}}{s + {ω}_{est}} {\dot{P}}_{conv} ,$ wobei ωₑₛₜ die Grenzfrequenz eines Tiefpassfilters ist.

2. Das Verfahren nach Anspruch 1, wobei der Drehwinkel (θ) basierend auf einer gewichteten Summe der Wirkleistung (P_{conv}) des Umrichters, der Referenzwirkleistung ( ${P}_{conv}^{Ref}$) des Umrichters und der Frequenzabweichung (ξ₂) der Spannung des Wechselstromnetzes, insbesondere basierend auf dem Integral der gewichteten Summe der Wirkleistung (P_{conv}) des Umrichters, der Referenzwirkleistung ( ${P}_{conv}^{Ref}$) des Umrichters und der Frequenzabweichung (ξ₂) der Spannung des Wechselstromnetzes, berechnet wird durch $\dot{θ} = - {k}_{1} {ξ}_{2} - {k}_{2} \left({P}_{conv}-{P}_{conv}^{Ref}\right) ,$ wobei k₁ und k₂ Gewichtungsfaktoren sind.

3. Das Verfahren nach Anspruch 2, wobei die Gewichtungsfaktoren der gewichteten Summe durch einen Linear-quadratischer-Regler-, LQR-, Rückkopplungsvektor bestimmt werden, der basierend auf einem linearen dynamischen Modell der Frequenzabweichung (ξ₂) der Spannung des Wechselstromnetzes und der Wirkleistung (P_{conv}) des Umrichters berechnet wird.

4. Das Verfahren nach Anspruch 3, wobei das lineare dynamische Modell auf einer Schwingungungsgleichung basiert.

5. Das Verfahren nach Anspruch 4, wobei die Schwingungsgleichung einen Term mit einer Droop-Konstante beinhaltet, die die Droop-Charakteristiken der Netzspannungsfrequenz (ω_{g}) repräsentiert.

6. Das Verfahren nach Anspruch 4 oder 5, wobei die Schwingungsgleichung einen Term beinhaltet, der das Tiefpassfilter repräsentiert, wobei das Tiefpassfilter eine verzögerte Reaktion der Netzspannungsfrequenz (ω_{g}) repräsentiert.

7. Das Verfahren nach einem der Ansprüche 1 bis 6, wobei die Referenzwirkleistung ( ${P}_{conv}^{Ref}$) des Umrichters basierend auf einer Nennnetzfrequenz (ωₙ), einer Spannung des Verknüpfungspunkts (v_{pcc}), einer virtuellen Induktivität (Lᵥᵢᵣₜ) zwischen einer Spannung des Umrichters (v_{conv}) und der Spannung des Verknüpfungspunkts (v_{pcc})geschätzt wird durch ${P}_{virt} = \frac{3}{2} \frac{- 1}{{ω}_{n} {L}_{virt}} {ν}_{pcc} Jν ,$ wobei ${P}_{conv}^{Ref} = {P}_{virt}$ gilt und J eine Rotationsmatrix ist.

8. Eine Einrichtung zum Steuern eines elektrischen Umrichters zur Verwendung in einem Wechselstromnetz, wobei die Einrichtung einen Prozessor umfasst, der zu Folgendem konfiguriert ist:
Berechnen eines Drehwinkels (θ) einer Spannungswellenform einer AC-Ausgabespannung des Umrichters basierend auf einer Wirkleistung (P_{conv}) des Umrichters, einer Referenzwirkleistung ( ${P}_{conv}^{Ref}$) des Umrichters und einer Frequenzabweichung (ξ₂) der Spannung des Wechselstromnetzes von einer Nennnetzfrequenz des Wechselstromnetzes;
Steuern des elektrischen Umrichters zum Ausgeben einer Ausgabewechselspannung mit dem berechneten Drehwinkel (θ) ;
wobei die Einrichtung **dadurch gekennzeichnet ist, dass** der Prozessor dazu konfiguriert ist, die Netzspannungsfrequenzabweichung (ξ₂) basierend auf einer Spannungsfrequenz des Umrichters, der Ableitung der Wirkleistung (P_{conv}) des Umrichters und einem Tiefpassfilter zu schätzen durch ${\hat{ξ}}_{2} = \dot{θ} - \frac{1}{K} \frac{{ω}_{est}}{s + {ω}_{est}} {\dot{P}}_{Uconv}$ wobei ωₑₛₜ die Grenzfrequenz eines Tiefpassfilters ist.

9. Die Einrichtung nach Anspruch 8, wobei der Prozessor dazu konfiguriert ist, den Drehwinkel (θ) basierend auf einer gewichteten Summe der Wirkleistung (P_{conv}) des Umrichters, der Referenzwirkleistung ( ${P}_{conv}^{Ref}$) des Umrichters und der Frequenzabweichung (ξ₂) der Spannung des Wechselstromnetzes, insbesondere basierend auf dem Integral der gewichteten Summe der Wirkleistung (P_{conv}) des Umrichters, der Referenzwirkleistung ( ${P}_{conv}^{Ref}$) des Umrichters und der Frequenzabweichung (ξ₂) der Spannung des Wechselstromnetzes, zu berechnen durch $\dot{θ} = - {k}_{1} {ξ}_{2} - {k}_{2} \left({P}_{conv}-{P}_{conv}^{Ref}\right) ,$ wobei k₁ und k₂ Gewichtungsfaktoren sind.

10. Die Einrichtung nach Anspruch 9, wobei der Prozessor dazu konfiguriert ist, die Gewichtungsfaktoren der gewichteten Summe durch einen Linear-quadratischer-Regler-,LQR-, Rückkopplungsvektor zu bestimmen, der basierend auf einem linearen dynamischen Modell der Frequenzabweichung (ξ₂) der Spannung des Wechselstromnetzes und der Wirkleistung (P_{conv}) des Umrichters berechnet wird.

11. Die Einrichtung nach Anspruch 10, wobei das lineare dynamische Modell auf einer Schwingungungsgleichung basiert.

12. Die Einrichtung nach einem der Ansprüche 8 bis 11, wobei der Prozessor dazu konfiguriert ist, die Referenzwirkleistung ( ${P}_{conv}^{Ref}$) des Umrichters basierend auf einer Nennnetzfrequenz (ωₙ), einer Spannung des Verknüpfungspunkts (v_{pcc}), einer virtuellen Induktivität (Lᵥᵢᵣₜ) zwischen einer Spannung des Umrichters (v_{conv}) und der Spannung des Verknüpfungspunkts (v_{pcc})zu schätzen durch ${P}_{virt} = \frac{3}{2} \frac{- 1}{{ω}_{n} {L}_{virt}} {ν}_{pcc} Jν ,$ wobei ${P}_{conv}^{Ref} = {P}_{virt}$ gilt und J eine Rotationsmatrix ist.

13. Ein computerlesbares Medium, das Anweisungen umfasst, die, wenn sie durch einen Computer ausgeführt werden, den Computer dazu veranlassen, das Verfahren nach einem der Ansprüche 1 bis 7 auszuführen.

## Revendications

1. Un procédé de commande d'un convertisseur électrique destiné à être utilisé dans un réseau électrique à courant alternatif,
le procédé comprenant :
le calcul d'un angle de rotation (θ) d'une forme d'onde de tension d'une tension alternative de sortie du convertisseur sur la base d'une puissance active (P_{conv}) du convertisseur, d'une puissance active de référence ( ${P}_{conv}^{ref}$ ) du convertisseur et d'un écart de fréquence (ξ̂₂) de la tension du réseau électrique à courant alternatif par rapport à une fréquence nominale de réseau du réseau électrique à courant alternatif ;
la commande du convertisseur électrique pour lui faire délivrer une tension alternative de sortie présentant l'angle de rotation (θ) calculé ; le procédé étant **caractérisé en ce que**
l'écart de fréquence (ξ̂₂) de la tension du réseau est estimé sur la base d'une fréquence de tension (θ̇) du convertisseur, de la dérivée de la puissance active (P_{conv}) du convertisseur et d'un filtre passe-bas selon ${\hat{ξ}}_{2} = \dot{θ} - \frac{1}{K} \frac{{ω}_{est}}{s + {ω}_{est}} {\dot{P}}_{conv} ,$ où ωₑₛₜ est la fréquence de coupure d'un filtre passe-bas.

2. Le procédé selon la revendication 1, dans lequel l'angle de rotation (θ) est calculé sur la base d'une somme pondérée de la puissance active (P_{conv}) du convertisseur, de la puissance active de référence ( ${P}_{conv}^{ref}$) du convertisseur et de l'écart de fréquence (ξ₂) de la tension du réseau électrique à courant alternatif, en particulier sur la base de l'intégrale de la somme pondérée de la puissance active (P_{conv}) du convertisseur, de la puissance active de référence ( ${P}_{conv}^{ref}$ ) du convertisseur et de l'écart de fréquence (ξ₂) de la tension du réseau électrique à courant alternatif, selon $\dot{θ} = - {k}_{1} {ξ}_{2} - {k}_{2} \left({P}_{conv}-{P}_{conv}^{ref}\right) ,$ où k₁ et k₂ sont des facteurs de pondération.

3. Le procédé selon la revendication 2, dans lequel les facteurs de pondération de la somme pondérée sont déterminés par un vecteur de rétroaction d'un régulateur linéaire-quadratique, LQR, calculé sur la base d'un modèle dynamique linéaire de l'écart de fréquence (ξ₂) de la tension du réseau électrique à courant alternatif et de la puissance active (P_{conv}) du convertisseur.

4. Le procédé selon la revendication 3, dans lequel le modèle dynamique linéaire est basé sur une équation du mouvement.

5. Le procédé selon la revendication 4, dans lequel l'équation du mouvement comporte un terme avec une constante de statisme représentant les caractéristiques de statisme de la fréquence de tension de réseau (ω_{g}).

6. Le procédé selon la revendication 4 ou 5, dans lequel l'équation du mouvement comporte un terme représentant le filtre passe-bas, le filtre passe-bas représentant une réponse retardée de la fréquence de tension de réseau (ω_{g}).

7. Le procédé selon l'une quelconque des revendications 1 à 6, dans lequel la puissance active de référence ( ${P}_{conv}^{ref}$) du convertisseur est estimée sur la base d'une fréquence nominale de réseau (ωₙ), d'une tension du point de couplage commun (v_{pcc}), d'une inductance virtuelle (Lᵥᵢᵣₜ) entre une tension du convertisseur (v_{conv}) et la tension du point de couplage commun (v_{pcc})selon ${P}_{virt} = \frac{3}{2} \frac{- 1}{{ω}_{n} {L}_{virt}} {ν}_{pcc} Jν ,$ où ${P}_{conv}^{ref} = {P}_{virt}$ et J est une matrice de rotation.

8. Un appareil de commande d'un convertisseur électrique destiné à être utilisé dans un réseau électrique à courant alternatif, l'appareil comprenant un processeur configuré pour :
calculer un angle de rotation (θ) d'une forme d'onde de tension d'une tension alternative de sortie du convertisseur sur la base d'une puissance active (P_{conv}) du convertisseur, d'une puissance active de référence ( ${P}_{conv}^{ref}$) du convertisseur et d'un écart de fréquence (ξ₂) de la tension du réseau électrique à courant alternatif par rapport à une fréquence nominale de réseau du réseau électrique à courant alternatif ;
commander le convertisseur électrique pour lui faire délivrer une tension alternative de sortie présentant l'angle de rotation (θ) calculé ; l'appareil étant **caractérisé en ce que**
le processeur est configuré pour estimer l'écart de fréquence (ξ₂) de la tension du réseau sur la base d'une fréquence de tension du convertisseur, de la dérivée de la puissance active (P_{conv}) du convertisseur et d'un filtre passe-bas selon ${\hat{ξ}}_{2} = \dot{θ} - \frac{1}{K} \frac{{ω}_{est}}{s + {ω}_{est}} {\dot{P}}_{conv}$ où ωₑₛₜ est la fréquence de coupure d'un filtre passe-bas.

9. L'appareil selon la revendication 8, dans lequel le processeur est configuré pour calculer l'angle de rotation (θ) sur la base d'une somme pondérée de la puissance active (P_{conv}) du convertisseur, de la puissance active de référence ( ${P}_{conv}^{ref}$) du convertisseur et de l'écart de fréquence (ξ₂) de la tension du réseau électrique à courant alternatif, en particulier sur la base de l'intégrale de la somme pondérée de la puissance active (P_{conv}) du convertisseur, de la puissance active de référence ( ${P}_{conv}^{ref}$) du convertisseur et de l'écart de fréquence (ξ₂) de la tension du réseau électrique à courant alternatif, selon $\dot{θ} = - {k}_{1} {ξ}_{2} - {k}_{2} \left({P}_{conv}-{P}_{conv}^{ref}\right) ,$ où k₁ et k₂ sont des facteurs de pondération.

10. L'appareil selon la revendication 9, dans lequel le processeur est configuré pour déterminer les facteurs de pondération de la somme pondérée par un vecteur de rétroaction d'un régulateur linéaire-quadratique, LQR, calculé sur la base d'un modèle dynamique linéaire de l'écart de fréquence (ξ₂) de la tension du réseau électrique à courant alternatif et de la puissance active (P_{conv}) du convertisseur.

11. L'appareil selon la revendication 10, dans lequel le modèle dynamique linéaire est basé sur une équation du mouvement.

12. L'appareil selon l'une quelconque des revendications 8 à 11, dans lequel le processeur est configuré pour estimer la puissance active de référence ( ${P}_{conv}^{ref}$) du convertisseur sur la base d'une fréquence nominale de réseau (ωₙ), d'une tension du point de couplage commun (v_{pcc}), d'une inductance virtuelle (Lᵥᵢᵣₜ) entre une tension du convertisseur (v_{conv}) et la tension du point de couplage commun (v_{pcc})selon ${P}_{virt} = \frac{3}{2} \frac{- 1}{{ω}_{n} {L}_{virt}} {ν}_{pcc} Jν ,$ où ${P}_{conv}^{ref} = {P}_{virt}$ et J est une matrice de rotation.

13. Un support lisible par ordinateur comprenant des instructions qui, lorsqu'elles sont exécutées par un ordinateur, amènent l'ordinateur à mettre en œuvre le procédé selon l'une quelconque des revendications 1 à 7.
